# EUROPÄISCHE PATENTSCHRIFT

(11) **EP 1 329 357 B1**
(45) Veröffentlichungstag und Bekanntmachung des Hinweises auf die Patenterteilung: **04.10.2006**
(21) Anmeldenummer: 03000327.1
(22) Anmeldetag: 09.01.2003
(51) Int. Cl.: B60P 1/16, B60P 3/12, B60P 1/04

(54) **Kipperfahrzeug**
Tipping vehicle
Véhicule basculant

(30) Priorität: 16.01.2002 DE 10201625
(43) Veröffentlichungstag der Anmeldung: 23.07.2003
(73) Patentinhaber: Pfaff, Bertold, 79183 Waldkirch-Siensbach (DE)
(72) Erfinder: Pfaff, Bertold, 79183 Waldkirch-Siensbach (DE)
(74) Vertreter: Huwer, Andreas

(56) Entgegenhaltungen:
- DE-A- 1 811 095
- DE-A- 2 938 518
- US-A- 3 550 801
- US-A- 6 053 691

## Beschreibung

Die Erfindung betrifft ein Kipperfahrzeug, mit einem eine Ladepritsche aufweisenden Kipper, der um eine Querachse und wenigstens eine in Fahrzeuglängsrichtung verlaufende Seitenkippachse zwischen einer Transportstellung, einer Hinterkippstellung und wenigstens einer Seitenkippstellung verkippbar auf einem Fahrgestell gelagert ist.

Ein derartiges, als landwirtschaftlicher Wagen ausgebildetes Kipperfahrzeug ist aus DE 18 11 095 C3 bekannt. Der Kipper dieses Fahrzeugs ist wahlweise zur Seite und nach hinten verkippbar und weist zum Abladen von Erntegut einen auch in Kippstellung antreibbaren Kratzboden auf.

Bei manchen Anwendungen kommt es jedoch auch vor, dass auf der Ladepritsche des Kipperfahrzeugs wechselweise Schüttgut und Fahrzeuge transportiert werden sollen, wie z.B. Bagger, Rasenmähfahrzeuge oder dergleichen Kraftfahrzeuge mit bauartbedingt geringer Höchstgeschwindigkeit. In DE 84 20 120 U1 wurde deshalb bereits ein gattungsfremdes Kippfahrzeug vorgeschlagen, das auf einem Fahrgestellrahmen eine Ladepritsche aufweist, die zum Entladen von Schüttgut aus einer Transportstellung, in der sie parallel zur Erstreckungsebene des Fahrgestellrahmens angeordnet ist, in eine Seitenkippstellung verkippbar ist. Zum Aufladen und Entladen von Fahrzeugen sind am in Fahrtrichtung hinteren Ende des Fahrgestells an der Fahrzeugrückseite Laderampen angeordnet, die mittels eines Schwenklagers aus einer Transportstellung, in der sie etwa um 90° zur Erstreckungsebene des Fahrgestells nach oben geklappt sind, in eine Gebrauchsstellung verschwenkbar sind, in der sie mit ihren freien Enden am Erdboden aufliegen und eine Auffahrrampe bilden. Die Laderampen sind am Fahrgestellrahmen verschwenkbar gelagert, d.h. sie behalten beim seitlichen Verkippen der Ladepritsche ihre Lage bei. Das Kippfahrzeug hat jedoch den Nachteil, dass die Handhabung der Laderampen noch relativ umständlich und gefährlich ist. Vor allem beim Be- und Entladen von Fahrzeugen mit niedriger Bodenfreiheit, wie z.B. Rasenmähfahrzeugen, besteht die Gefahr, dass diese an den Übergangsstellen von den Laderampen zur Ladepritsche aufsetzen und beschädigt werden. Außerdem können die Fahrzeuge bei unvorsichtigem Manövrieren seitlich von den Laderampen abrutschen, wobei sich das Ladepersonal verletzen kann, Außerdem kann das Ladegut beschädigt werden.

Aus US 6 053 691 ist auch bereits ein gattungsfremder Fahrzeug-Transportanhänger bekannt, der ein Fahrgestell mit einem darauf angeordneten Aufbau zur Aufnahme eines auf dem Anhänger zu transportieranden Fahrzeugs aufweist. Der Aufbau ist um eine Querachse aus einer Transportstellung, in der er etwa in einer Horizontalebene angeordnet ist, derart nach hinten verkippbar, dass er als Auffahrrampe für das Fahrzeug nutzbar ist. Der Fahrzeug-Transportanhänger ist jedoch für den Transport von Schüttgut praktisch nicht geeignet. Insbesondere ist der Kippwinkel, um den der Aufbau verkippt werden kann, kleiner als der Schüttwinkel von Schüttgut, so dass dieses in Kippstellung des Aufbaus nicht selbständig von der von der Ladefläche des Aufbaus herunterrutscht.

Es besteht deshalb die Aufgabe, ein Kipperfahrzeug der eingangs genannten Art zu schaffen, das universell einsetzbar ist und eine einfache Handhabung beim Beund Entladen ermöglicht.

Die Lösung dieser Aufgabe besteht darin, dass die Querachse vom hinteren Ende des Kippers beabstandet im Bereich der Räder des Fahrgestells angeordnet ist, und dass der Kipper dorart nach hinten über das Fahrgestell übersteht, dass er in Hinterkippstellung direkt als Auffahrrampe nutzbar ist.

In vorteilhafter Weise kann der Kipper dadurch zum Entladen von Schüttgut zur Seite bis über den Schüttwinkel verkippt werden, so dass das Schüttgut auf einfache Weise nach der jeweils gewünschten Fahrzeugseite abgekippt werden kann. Der Kippwinkel zwischen der Ebene des Fahrgestells und der Ebene der Ladepritsche ist so gewählt, dass der Kipper in Hinterkippstellung eine Laderampe bildet, die direkt mit einem auf das Kipperfahrzeug zu ladenden oder von diesem zu entladenden Fahrzeug oder dergleichen Ladegut befahren werden kann. Da die Laderampe durch die Ladepritsche selbst gebildet ist, können auch Fahrzeuge mit geringer Bodenfreiheit, wie z.B. Rasenmähfährzeuge, über die Laderampe fahren, ohne dass die Gefahr besteht, dass diese Fahrzeuge zwischen ihren Achse auf der Laderampe aufsetzen. Auch entfällt ein umständliches Mitführen und Montieren separater Laderampen. In Hinterkippstellung ist die Ladepritsche über ihre gesamte Breite befahrbar, was gegenüber Kipperfahrzeugen mit zwei seitlich nebeneinander angeordneten, zur einen Zwischenraum voneinander beabstandeten Laderampen eine wesentliche größere Sicherheit beim Be- und Entladen des Kippers mit Fahrzeugen ergibt. Das erfindungsgemäße Kippfohrzeug ist sowohl beim Entladen von Schüttgut als auch beim Be- und Entladen von Fahrzeugen einfach und sicher handhabbar. Das Kippfahrzeug ist universell einsetzbar und deckt die Einsatzbereiche eines Tiefladers, eines Pritschenwagens und eines herkömmlichen Kipperfahrzeugs ab. In vorteilhafter Weise wird somit wird für unterschiedliche Anwendungen nur noch ein einziges Lastfahrzeug benötigt.

Bei einer besonders vorteilhaften Ausführungsform liegt der Kipper in Hinterkippstellung mit wenigstens einer an seinem hinteren Ende vorgesehenen Unterstützungsstelle direkt oder indirekt über ein Stützelement am Erdboden auf Dadurch wird eine noch größere Sicherheit vor allem beim Be- und Entladen schwerer Fahrzeuge erreicht.

Vorteilhaft ist, wenn die Unterstützungsstelle an einem an der Unterseite der Ladepritsche angeordneten Querträger vorgesehen ist, der vorzugsweise ein Rahmenteil eines Außenrahmens der Ladepritsche bildet. Die Ladepritsche kann dann in Hinterkippstellung über ihre gesamte Breite durchgängig am Erdboden abgestützt werden. Dabei wird ein separates Stützelement eingespart. Außerdem ergibt sich eine einfache und sichere Bedienung des Kippers, bei der das Betätigen eines separates Stützelements entfällt.

Bei einer zweckmäßigen Ausgestaltung der Erfindung ist mit der Ladepritsche eine Heckklappe um eine etwa in der Ebene der Ladepritsche an deren hinterem Rand angeordnete Schwenkachse verschwenkbar verbunden, wobei die Heckklappe in Hinterkippstellung des Kippers mit ihrem der Schwenkachse gegenüberliegenden freien Randbereich bis zum Erdboden verschwenkbar ist. Die Heckklappe bildet dann in Hinterkippstellung der Ladepritsche ein Überbrückungselement, welches den Erdboden mit der Ladefläche der Ladepritsche verbindet. Dabei kann die Heckklappe die Ladefläche in gerader Verlängerung fortsetzen. Es ist aber auch denkbar, dass die Erstreckungsebene der bis zum Erdboden verschwenkten Heckklappe in Hinterkippstellung der Ladepritsche etwas gegenüber der Erstreckungsebene geneigt ist. Vor allem bei kleinen Kipperfahrzeugen kann die Heckklappe einteilig ausgebildet sein. Die Heckklappe kann aber auch mehrere, in Erstreckungsrichtung ihrer Schwenkachse nebeneinander angeordnete Heckklappeteile aufweisen. Letzteres ist vor allem bei mit Muskelkraft verschwenkbaren großen Heckklappen zweckmäßig, damit diese besser handhabbar sind. Die Heckklappe kann Anschlussstellen zum Verbinden mit wenigstens einer Aufsetzbordwand aufweisen. Dadurch kann die Höhe der in Schließstellung befindlichen Heckklappe verändert werden.

Bei einer besonders vorteilhaften Ausführungsform der Erfindung ist das Kipperfahrzeug als Dreiseitenkipper ausgebildet. Das Kippfahrzeug ist dann noch vielseitiger verwendbar.

Bei einer zweckmäßigen Ausgestaltung der Erfindung weist der Kipper an seinen Längsseiten seitliche Bordwände auf, die über Schwenklager um eine etwa in der Ebene der Ladepritsche verlaufende Schwenkachse zwischen einer Schließ- und einer Offenstellung verschwenkbar mit der Ladepritsche verbunden sind. Die Ladepritsche kann dann noch besser für den Transport von Gütern genutzt werden, insbesondere von Schüttgut. Die Bordwände können ein- oder mehrteilig ausgebildet sein. Sie können Anschlussstellen zum Verbinden mit Aufsetzbordwänden aufweisen.

Bei einer bevorzugten Ausführungsform der Erfindung ist das Kipperfahrzeug als ein vorzugsweise eine Zentralachse aufweisender Kippanhänger ausgebildet. Dabei ist die Zentralachse in Fahrzeuglängsrichtung etwa mittig zur Ladepritsche angeordnet oder etwas gegenüber der Mitte nach hinten versetzt. An der Deichsel des Kippanhängers ist vorzugsweise eine in ihrem Abstand zum Erdboden verstellbare Stütze vorgesehen, so dass der Kippanhänger in Hinterkippstellung dann einerseits an dieser Stütze und andererseits an der an seinem hinteren Ende vorgesehenen Unterstützungsstelle am Erdboden aufliegt. Der Kippanhänger kann dadurch auch dann sicher be- und entladen werden, wenn er von der Zugmaschine getrennt ist.

Der Kipper einen geschlossenen Aufbau aufweisen, insbesondere einen Kastenoder Planenaufbau. Das Ladegut ist dann durch den Aufbau gegen Umwelteinflüsse geschützt. Außerdem kann der geschlossene Aufbau als Sichtschutz oder Sichtblende dienen.

Bei einer besonders vorteilhaften Ausführungsform der Erfindung weist das Fahrgestell wenigstens eine über Blattfedern oder dergleichen Federelemente mit einem Fahrgestellrahmen verbundene Achse auf, wobei der Fahrgestellrahmen Längsträger hat, die zumindest im Bereich der Federelemente als unterseitig offenes Hohlprofil ausgebildet sind, insbesondere als U-Profil, wobei die Federelemente an in den Innenhöhlungen der Fahrgestell-Längsträger angeordneten Lagerstellen mit den Fahrgestell-Längsträgern verbunden sind. Dadurch ergibt sich auch im Bereich der Achse eine sehr geringe Bauhöhe des Fahrgestells, was eine niedrige Ladepritsche und einen tiefliegenden Schwerpunkt des Kippers ermöglicht. Trotzdem kann die Ladepritsche äußerst flach aufgebaut sein. Die Ladepritsche ist dadurch in Hinterkippstellung noch einfachere und sicherer mit einem Fahrzeug befahrbar.

Vorteilhaft ist, wenn die Zentralachse eine Tandemachse ist und wenn die Lagerstellen für die Querachse in dem Zwischenraum zwischen den beiden Achsen der Tandemachse angeordnet sind, insbesondere zwischen zueinander benachbarten Rädern der beiden Achsen. Dadurch ergibt sich ein kompakt aufgebauter Kippanhänger, mit dem auch schwere Lasten transportiert werden können. Die Achsen der Tandemachse sind in an sich bekannter Weise nahe beieinander vorzugsweise etwa in der Mitte der Ladepritsche angeordnet.

Bei einer zweckmäßigen Ausgestaltung der Erfindung weist die Ladepritsche im Bereich der Hinterräder der Tandemachse wenigstens eine Ausformung auf in welche die Hinterräder in Hinterkippstellung des Kippers eingreifen. Der Kippanhänger weist dann einen niedrigen Schwerpunkt auf.

Vorteilhaft ist, wenn das Fahrgestell einen Fahrgestellrohmen aufweisf, der an seinem hinteren Endbereich oberseitig einen vorzugsweise durch eine nach hinten abfallende Abschrägung gebildeten Bewegungsfreiraum hat, in den in Hinterkippstellung ein Teilbereich des Kippers eingreift. Auch dadurch wird ein niedriger Schwerpunkt des Kipperfahrzeugs ermöglicht.

Das Kipperfahrzeug kann eine hydraulische Verstellvorrichtung für den Kipper aulweisen. Diese kann motorhydraulisch, batteriehydraulisch oder mit Muskelkraft betätigbar sein. Das Kipperfahrzeug ist dann noch einfacher be- und entladbar.

Bei einer vorteilhaften Ausgestaltung der Erfindung weist die hydraulische Verstellvorrichtung zumindest einen vorzugsweise als Teleskop- oder Stufenzylinder ausgebildeten Hubzylinder und vorzugsweise wenigstens einen Rückholzylinder auf die jeweils mit ihrem einen Ende am Fahrgestell und mit ihrem anderen Ende am Kipper angreifen. Durch den Rückholzylinder kann der Kipper in jeder Kipplage festgahalten werden. Dadurch wird verhindert, dass der Kipper durch äußere Umstände, wie zum Beispiel eine hecklastige Beladung der Ladepritsche, in Hinterkippstellung hängen bleibt, so dass aus dem Hubzylinder dann die Hydraulikflüssigkeit abläuft und der Kipper dann nur noch durch die äußeren Umstände gehalten ist und gegebenenfalls beim Auftreten von Winddruck unkontrolliert in die Transportstellung zurückfällt. Der Teleskop- oder Stufenzylinder kann zweiseitig hydraulisch druckbeaufschlagbar sein. Der Teleskop- oder Stufenzylinder kann dann die Funktion des Rückholzylinders mit übernehmen. Es ist aber auch denkbar, dass der Kipper eine Rückholeinrichtung mit einer Feder aufweist, gegen deren Rückstellkraft der Kipper aus der Transportstellung in die Hinterkippstellung verschwenkbar ist.

Vorteilhaft ist, wenn der Hubzylinder etwa mittig an der Ladepritsche angreift und wenn die Angriffsstelle des Rückholzylinders weiter vorne am Kipper angeordnet ist als die des Hubzylinders. Dadurch ergibt sich eine platzsparende Anordnung der zum Verkippen des Kippers vorgesehenen Arbeitszylinder, bei welcher diese in Transportstellung des Kippers im wesentlichen zwischen Längsträgern des Fahrgestells untergebracht sein können.

Bei einer zweckmäßigen Ausgestaltung der Erfindung sind zum Verkippen des Kippers in die Seitenkippstellungen in Fahrzeuglängsrichtung zueinander versetzte Schwenklager vorgesehen, die jeweils ein mit dem Kipper verbundenes Lageroberteil und ein mit dem Fahrgestell verbundenes Lagerunterteil aufweisen, wobei dass das Lageroberteil und das Lagerunterteil mittels wenigstens eines Verriegelungselements lösbar miteinander verbindbar sind. Das Verriegelungselement kann beispielsweise ein Bolzen sein, der in eine Aufnahme wenigstens eines der Lagerteile einsetzbar ist und in Gebrauchsstellung das andere Lagerteil des Schwenklagers zumindest bereichsweise hintergreift.

Besonders vorteilhaft ist, wenn die hinteren Schwenklager im Bereich der Querachse angeordnet und jeweils derart ausgebildet sind, dass das Lageroberteil und das Lagerunterteil des Schwenklagers sowohl um die dem Schwenklager zugeordnete Seitenkippachse als auch um die Querachse relativ zueinander verschwenkbar sind. Dadurch ergibt sich eine einfache aufgebaute Lageranordnung, mittels welcher der Kipper mit nur vier Schwenklagern wahl- oder wechselweise nach links, rechts oder hinten verkippt werden kann. Die in Vorwärtsfahrtrichtung hinteren Schwenklager sind dabei vorzugsweise als Kugelgelenk ausgebildet dessen Kugelmittelpunkt im Schnittpunkt der Querachse und der batreffenden Seitenkippachse angeordnet ist.

Erwähnt werden soll noch, dass die Ladepritsche Befestigungsstellen zum Verankern von den Pritschenboden überragenden Quer- und/oder Längsanschlägen für ein auf der Ladepritsche zu transportierendes Fahrzeug oder dergleichen Ladegut aulweisen kann. Die Queranschläge können keilförmig ausgebildet sein und beispielsweise eine an die Form eines Reifens eines zu transportierendes Fahrzeugs angepasste Keilschräge aufweisen.

Nachfolgend sind Ausführungsbeispiele der Erfindung anhand der Zeichnung näher erläutert. Es zeigen:
- Fig. 1: eine Seitenansicht eines einen Kipper aulweisenden Kippanhängers, wobei der Kipper in Transportstellung angeordnet ist,
- Fig. 2: eine Seitenansicht des Kippanhängers in Hinterkippstellung,
- Fig. 3: eine Vorderansicht des Kippanhängers, wobei sich der Kipper oder die Kippbrücke in der Transportstellung befindet,

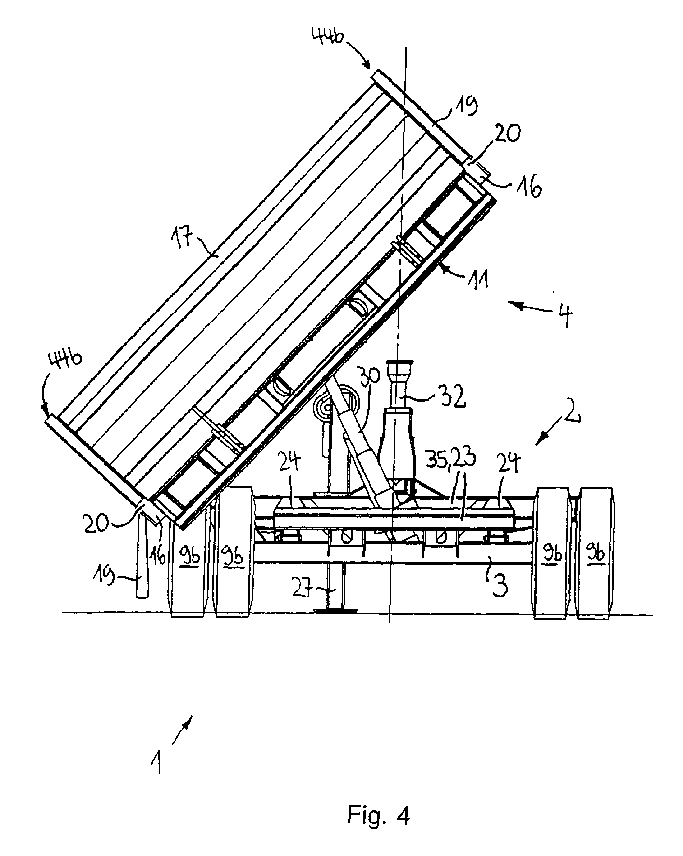

- Fig. 4: eine Rückansicht des Kippanhängers, wobei sich der Kipper in der linken Seitenkippstellung befindet,
- Fig. 5: eine Vorderansicht des in Fig. 4 gezeigten Kippanhängers, wobei der Kipper in der linken Seitenkippstellung angeordnet ist,
- Fig. 6: eine perspektivische Ansicht des Kippanhängers, wobei der Kipper in Transportstellung angeordnet ist,
- Fig. 7: eine perspektivische Ansicht des Kippanhängers, wobei der Pritschenboden des in Hinterkippstellung befindlichen Kippers eine Auffahrrampe für ein Fahrzeug bildet,
- Fig. 8: eine perspektivische Ansicht eines Kippanhängers, wobei der Kipper zum Entladen von Schüttgut in Fahrtrichtung nach links verkippt ist,
- Fig. 9: eine Seitenansicht des in Hinterkippstellung befindlichen Kippanhängers beim Auffahren eines Fahrzeugs auf den Pritschenboden des Kippers, wobei die Umrisse des Fahrzeugs vor, während und nach dem Auffahren auf den Pritschenboden schematisch dargestellt sind,
- Fig. 10: eine Unteransicht eines in Transportstellung befindlichen Kippanhängers,
- Fig. 11: einen Querschnitt durch einen Längsträger des KippanhängerFahrgestells,
- Fig. 12: eine Teilseitenansicht des Fahrgestells im Bereich der Tandemachse, wobei verdeckte Kanten strichliniert dargestellt sind,
- Fig. 13: eine perspektivische Ansicht eines Kippanhängers, auf dessen vordere und hintere Bordwand jeweils eine Auflagerstütze zum Auflegen von Rohren oder dergleichen langem Transportgut aufgesteckt ist, wobei die Auflagerstützen von der Bordwand abnehmbar und auf der Ladepritsche ablegbar sind,
- Fig. 14: eine Seitenansicht des in Fig. 13 gezeigten Kippanhängers und
- Fig. 15: eine Aufsicht auf den in Fig. 13 gezeigten Kippanhänger.

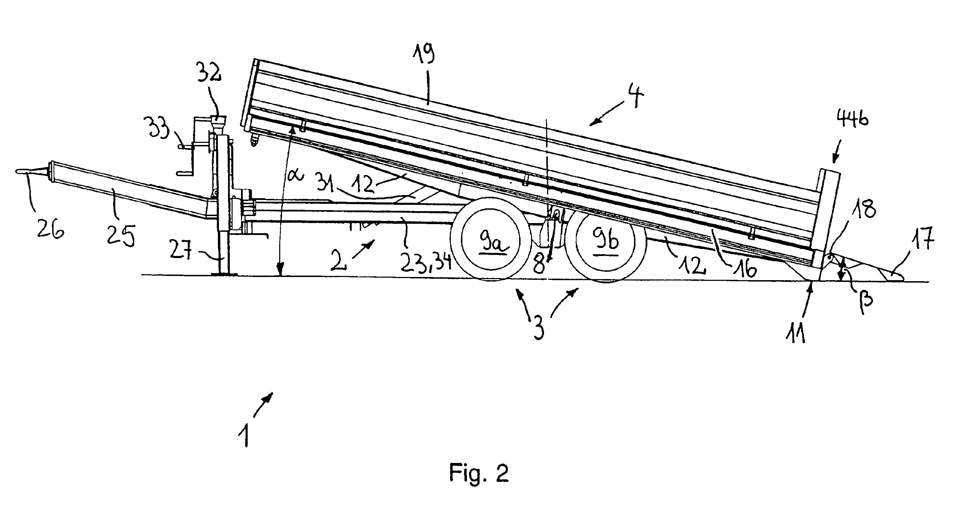

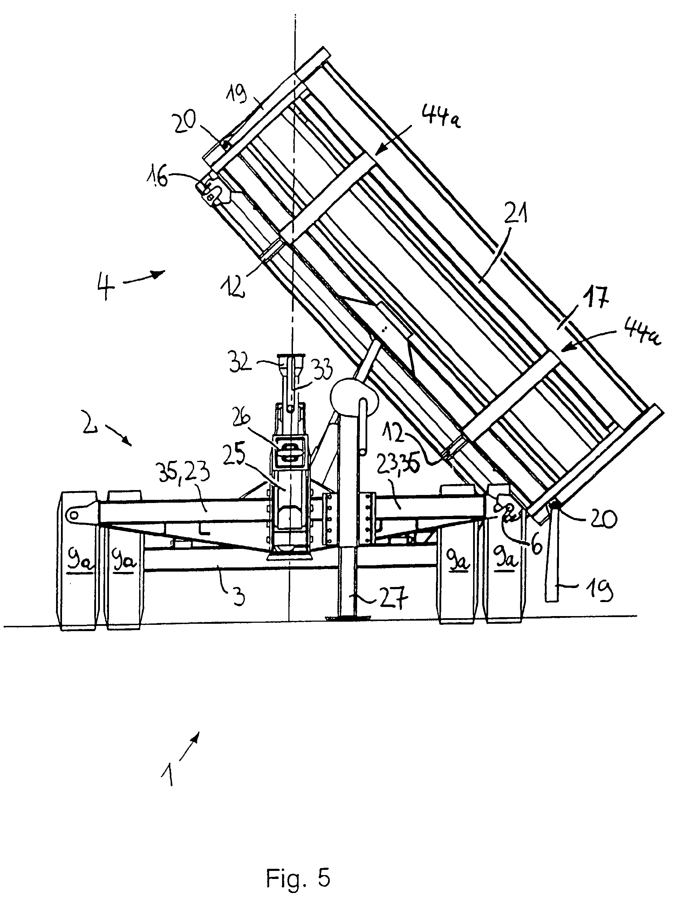

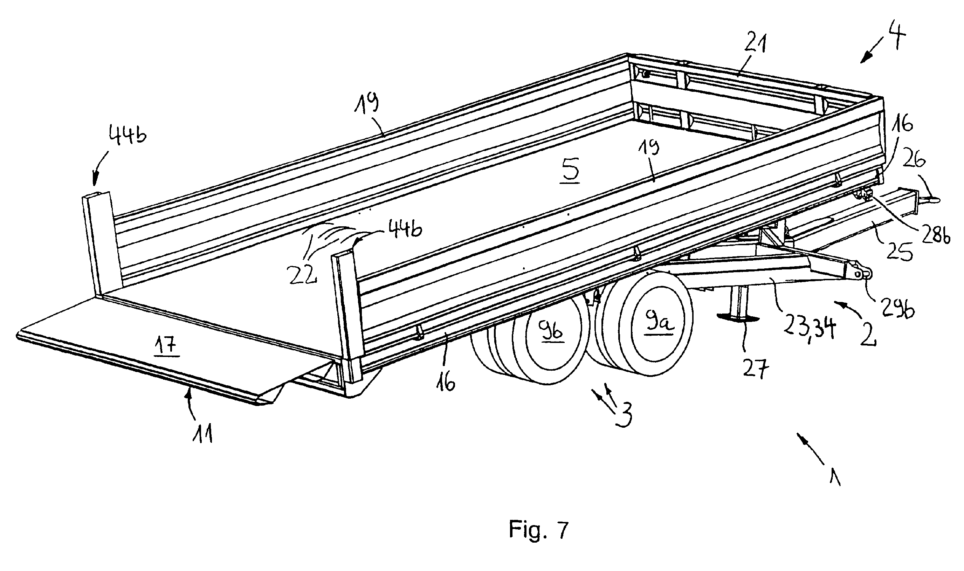

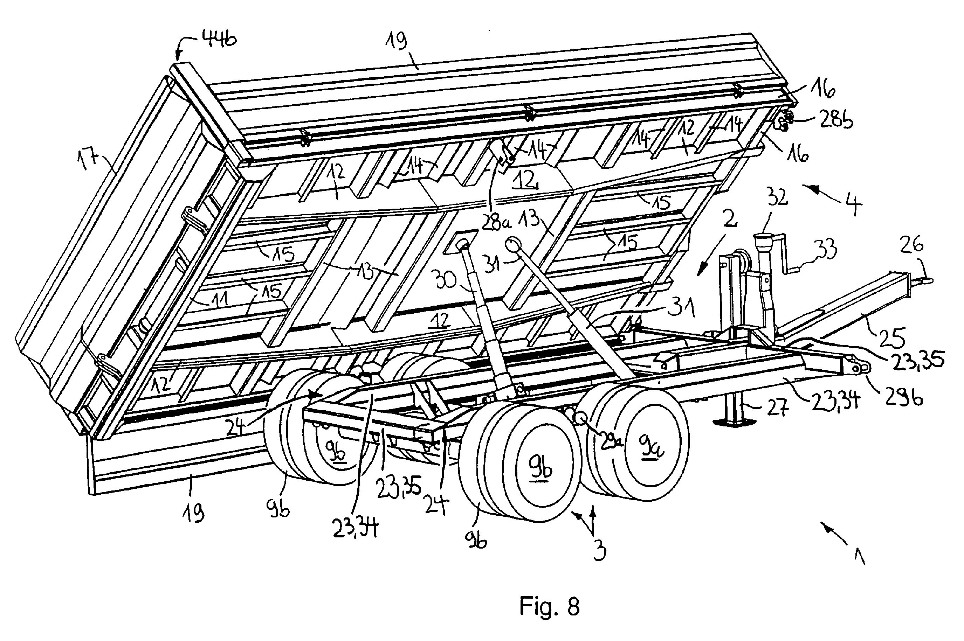

Ein im ganzen mit 1 bezeichnetes, als Kippanhänger ausgebildetes Kipperfahrzeug hat ein Fahrgestell 2 mit einer Tandemachse 3, auf dem ein Kipper 4 mit einer unterbrechungsfrei durchgehenden Ladepritsche 5 angeordnet ist. Der Kipper 4 ist als Dreiseitenkipper ausgebildet, der zwischen einer Transportstellung, einer Hinterkippstellung (Fig. 2 und 7) sowie einer linken Seitenkippstellung (Fig. 5 und 8) und einer rechten Seitenkippstellung verkippbar ist.

In Transportstellung ist die Ladepritsche 5 mit ihrem Pritschenboden etwa parallel zur Erstreckungsebene des Fahrgestells 2 angeordnet. Zum Verkippen des Kippers 4 zwischen der Transportstellung und der linken Seitenkippstellung ist der Kipper über eine etwa parallel zur Längsmittelachse des Kipperfahrzeugs verlaufende linke Seitenkippachse 6 verkippbar mit dem Fahrgestell 2 verbunden. Wie in Fig. 5 erkennbar ist, verläuft die linke Seitenkippachse 6 entlang der in Vorwärtsfahrtrichtung linken Außenseite des Fahrgestells 2 unterhalb des Pritschenbodens. In entsprechender Weise ist der Kipper zum Verkippen zwischen der Transportstellung und der rechten Seitenkippstellung über eine etwa parallel zur Längsmittelachse des Kipperfahrzeugs verlaufende rechte Seitenkippachse 7 verkippbar an dem Fahrgestell 2 gelagert. Die rechte Seitenkippachse 7 verläuft an der rechten Außenseite des Fahrgestells 2 unterhalb des Pritschenbodens. Der Kippwinkel zu den Seiten ist so bemessen, dass auf der Ladepritsche 5 befindliches Schüttgut in der linken und rechten Seitenkippstellung jeweils selbständig von der Ladepritsche 5 herunterrutscht.

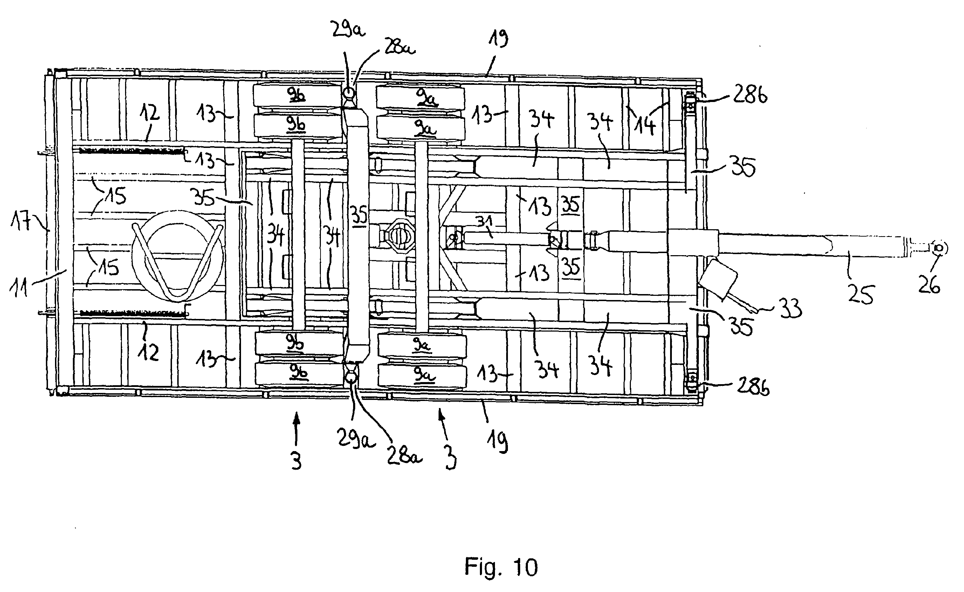

Wie in Figur 2 erkennbar ist, ist der Kipper 4 zum Verkippen zwischen der Transportstellung und der Hinterkippstellung über eine etwa rechtwinklig zur Längsmittelachse des Kipperfahrzeugs und parallel zur Erstreckungsebene der Ladepritsche 5 verlaufende Querachse 8 verkippbar mit dem Fahrgestell 2 verbunden. Die Querachse 8 verläuft etwas unterhalb des Pritschenbodens etwa in der durch die linke Seitenkippachse 6 und die davon beabstandete rechte Seitenkippachse 7 aufgespannten Ebene. In Fig. 2 und 7 ist erkennbar, dass die Querachse 8 vom hinteren Ende der Ladepritsche 5 beabstandet im Bereich der Räder 9a, 9b des Fahrgestells angeordnet ist. In Figur 2 ist erkennbar, dass die Ladepritsche 5 nach hinten über das Fahrgestell 2 übersteht. Der Abstand zwischen der Querachse 8 und dem Erdboden einerseits und der Abstand der Querachse 8 vom hinteren Ende der Ladepritsche 5 andererseits sind derart aufeinander abgestimmt, dass die Ladepritsche 5 in Hinterkippstellung direkt als Auffahrrampe für ein Fahrzeug 10 nutzbar ist. Wie in Fig. 2 und 10 erkennbar ist, liegt der Kipper 4 dabei in Hinterkippstellung mit einer an seinem hinteren Ende befindlichen Unterstützungsstelle 11 am Erdboden auf In Hinterkippstellung kann der Neigungswinkel a zwischen der Erstreckungsebene des Fahrgestells 2 und der Ebene der Ladepritsche 5 etwa 10° bis 16°, insbesondere 12° bis 14° und bevorzugt 13° betragen. Die Querachse 8 ist etwa mittig zur Ladepritsche 5 angeordnet oder etwas gegenüber die Mitte der Ladepritsche 5 nach hinten versetzt. Die Lage der Querachse 8 ist so gewählt, dass man ohne Abstützung am hinteren Ende der Ladepritsche 5 beim Beladen oder beim Herunterfahren eines auf der Ladepritsche 5 befindlichen Fahrzeugs auskommt. Das Verhältnis des Abstands a zwischen der Querachse 8 und dem hinteren Ende der Ladepritsche 5 zu der Länge L der Ladepritsche 5 kann zwischen 30 und 60%, insbesondere zwischen 40 und 50% und bevorzugt etwa 44% betragen.

Wie in Fig. 8 besonders gut erkennbar ist, weist der Kipper unterhalb des Pritschenbodens zwei nebeneinander angeordnete, quer zur Fahrtrichtung des Kippanhängers voneinander beabstandete Längsträger 12 auf, die sich etwa über die gesamte Länge der Ladepritsche 5 erstrecken. Die Längsträger 12 sind durch mehrere nebeneinander angeordnete, in Fahrtrichtung durch Zwischenräume voneinander beabstandete Querträger 13 miteinander verbunden. Die Längsträger 12 und die Querträger 13 können als U-förmige oder geschlossene Kastenprofile ausgebildet sein, die untereinander und mit dem Pritschenboden verschweißt oder auf andere Weise verbunden sind. In Figur 8 ist erkennbar, dass die Längsträger 12 in einem von ihren Enden beabstandeten Abschnitt eine etwa konstante Höhe aulweisen, und dass die Höhe des Längsträgers 12, ausgehend von diesem Abschnitt zu den Enden des Längsträgers 12, jeweils abnimmt. Zwischen den Längsrändern des Pritschenbodens und den Längsträgers 12 sind zur Verstärkung des Pritschenbodens an der Unterseite der Ladepritsche 5 Quertraversen 14 angeordnet, die mit dem Pritschenboden und/oder den Längsträgern 12 verschweißt sind. Die Quertraversen 14 sind über die Länge der Ladepritsche 5 verteilt angeordnet. Zwischen den Längsträgern 12 sind zur Verstärkung des Pritschenbodens an der Unterseite der Ladepritsche 5 Längsprofile 15 angeordnet, die mit dem Pritschenboden und/oder den Querträgern 13 verschweißt sind. An seiner Außenseite weist die Ladepritsche 5 einen Außenrahmen 16 auf, der dem Pritschenboden, den Querträgern 13, den Quertraversen 14, den Längsträgern 12 und/oder den Längsprofilen 15 verschweißt ist. Das hintere Rahmenteil des Außenrahmens 16 ist durch eine als Kastenprofil ausgebildete Quertraverse gebildet, an deren Unterseite die in Hinterkippstellung am Erdboden aufliegende Unterstützungsstelle 11 vorgesehen ist.

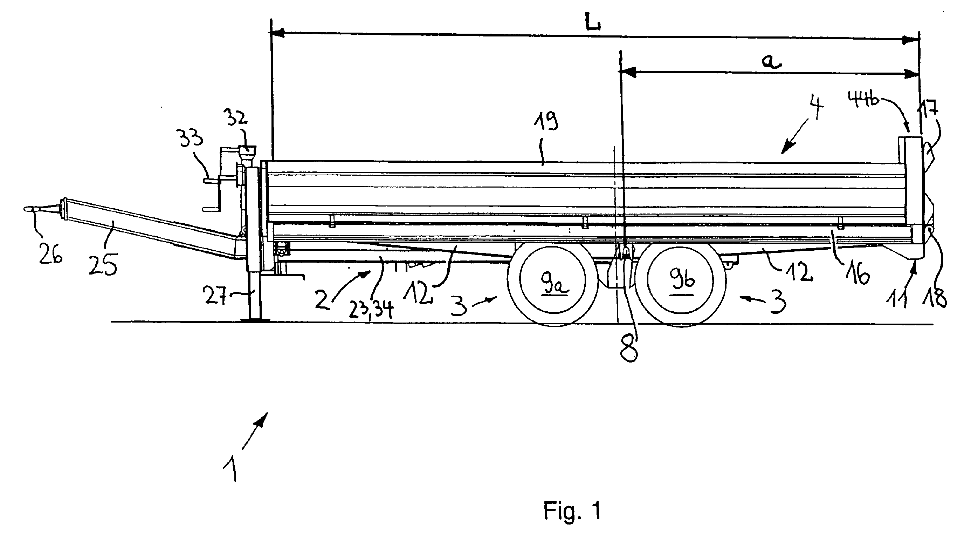

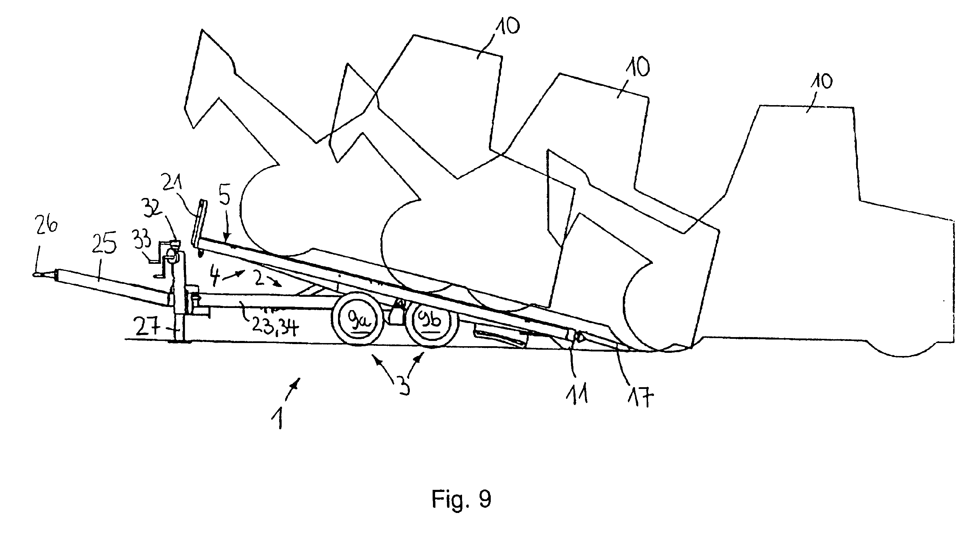

Am hinteren Ende des Kippers 4 ist eine Heckklappe 17 angeordnet, die um eine etwa in der Ebene der Ladepritsche 5 an deren hinterem Rand angeordnete Schwenkachse 18 aus der in Fig. 1 gezeigten Schließstellung in die in Fig. 2 gezeigte Offenstellung verschwenkbar mit der Ladepritsche 5 verbunden ist. In Hinterkippstellung des Kippers 4 liegt die Heckklappe 17 in Offenstellung mit ihrem der Schwenkachse 18 gegenüberliegenden freien Randbereich am Erdboden auf Der Neigungswinkel β zwischen der Erstreckungsebene des Fahrgestells 2 bzw. dem Erdboden und der Erstreckungsebene der Heckklappe 17 kann etwa 12° bis 20°, insbesondere 13° bis 17° und bevorzugt 16° betragen. In Hinterkippstellung des Kippers 4 setzt die in Offenstellung befindliche Heckklappe 17 die Ladepritsche 5 fort und verlängert diese, so dass sich eine durchgehende Laderampe ergibt (Fig. 2). In Fig. 9 ist erkennbar, dass auf diese Laderampe ein Fahrzeug 10 auffahren oder von der Laderampe herunter fahren kann. Dabei wird auch bei Fahrzeugen 10 mit geringer Bodenfreiheit ein Aufsetzen des Fahrzeugs 10 während des Beoder Entladevorgangs vermieden.

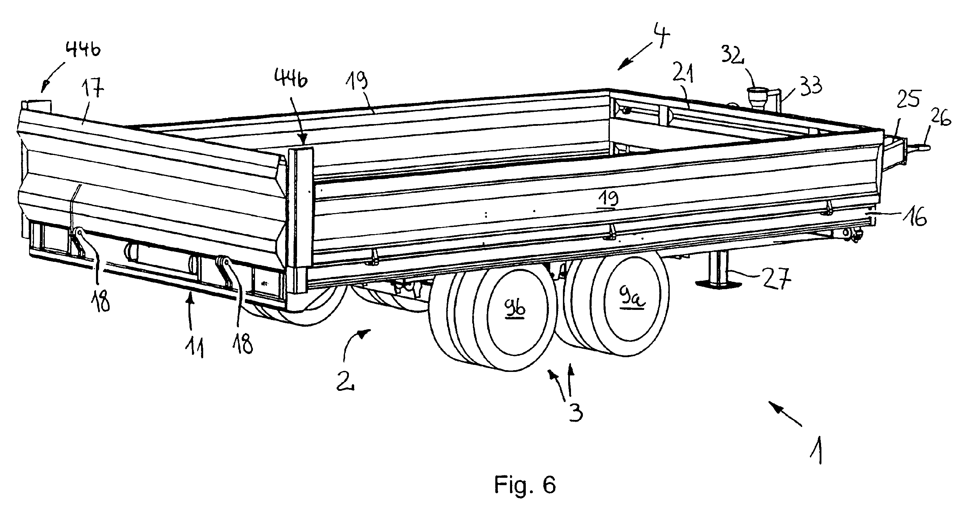

Wie in Fig. 5 und 8 besonders gut erkennbar ist, weist der Kipper 4 an seinen Längsseiten seitliche Bordwände 19 auf, die jeweils über Schwenklager um eine etwa in der Ebene der Ladepritsche 5 verlaufende Schwenkachse 20 zwischen einer Schließ- und einer Offenstellung verschwenkbar mit der Ladepritsche 5 verbunden sind. Am vorderen Ende der Ladepritsche 5 ist eine Bordwand 21 angeordnet, die fest mit der Ladepritsche 5 verbunden ist. In Figur 6 ist erkennbar, dass die Heckklappe 17 etwas höher ist als die Bordwände 19. Es sind aber auch andere Ausführungsbeispiele denkbar, bei denen die Heckklappe 17 etwa die gleiche Höhe aufweist wie die Bordwände 19. Die Höhe der vorderen Bordwand 21, der seitlichen Bordwände 19 und der Heckklappe 17 ist so bemessen, dass mit dem Kipper 4 Schüttgut gut transportierbar ist.

Die Ladepritsche 5 ist vorzugsweise durchgehend eben ausgebildet. Sie kann aber auch - wie in Figur 7 erkennbar ist - im Bereich der Hinterräder 9b der Tandemachse Ausformungen 22 aufweisen, in welche die Hinterräder in Hinterkippstellung des Kippers 4 eingreifen. Dadurch wird ein besonders niedriger Schwerpunkt des Kippers 4 ermöglicht. Die Reifen der Hinterräder 9b können in Hinterkippstellung den Kipper berühren. Auch durch diese Maßnahme wird niedriger Schwerpunkt des Kippers 4 ermöglicht.

Das Fahrgestell 2 weist einen Fahrgestellrahmen 23 auf, der durch Fahrgestell-Längsträger 34 und diese miteinander verbindende Fahrgestell-Querträger 35 gebildet ist. Die Längsträger 34 und die Querträger 35 sind jeweils als Kastenprofile ausgebildet, die miteinander verschweißt sind. Wie in Figur 8 erkennbar ist, hat der Fahrgestellrahmen 23 an seinem hinteren Endbereich oberseitig einen durch eine nach hinten abfallende Abschrägung 24 gebildeten Bewegungsfreiraum auf, in den in Hinterkippstellung ein Teilbereich des Kippers 4 eingreift. Auch durch diese Maßnahme wird ein niedriger Schwerpunkt des Kippers 4 ermöglicht.

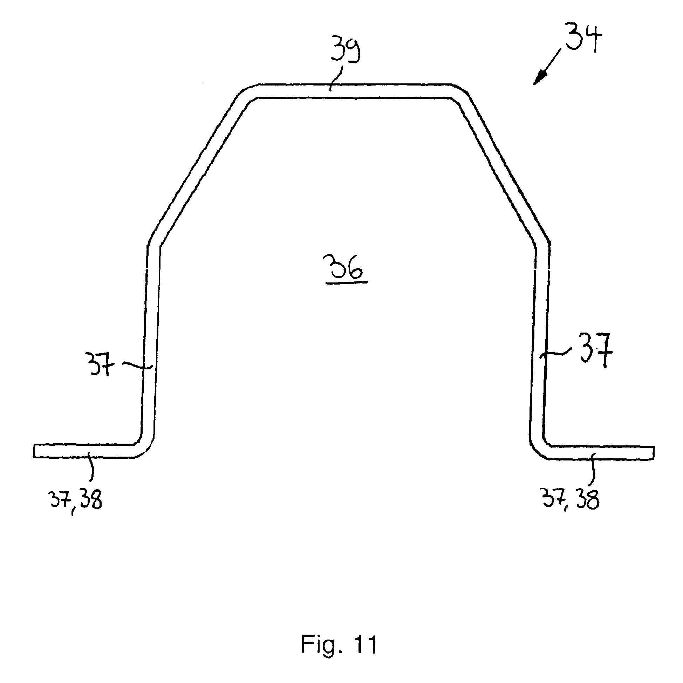

Wie in Fig. 11 besonders gut erkennbar ist, sind die Fahrgestell-Längsträger 34 als unterseitig offenes, etwa U-förmigas Hohlprofil mit einer Innenhöhlung 36 ausgebildet, die zwischen U-Schenkeln 37 des Hohlprofils gebildet ist. Dabei sind die freien Randbereiche 38 der U-Schenkel 37 nach außen abgewinkelt. An ihren gegenüberliegenden, mit dem U-Quersteg 38 verbundenen Randbereichen sind die U-Schenkel 37 zum U-Quersteg 38 hin nach innen abgewinkelt.

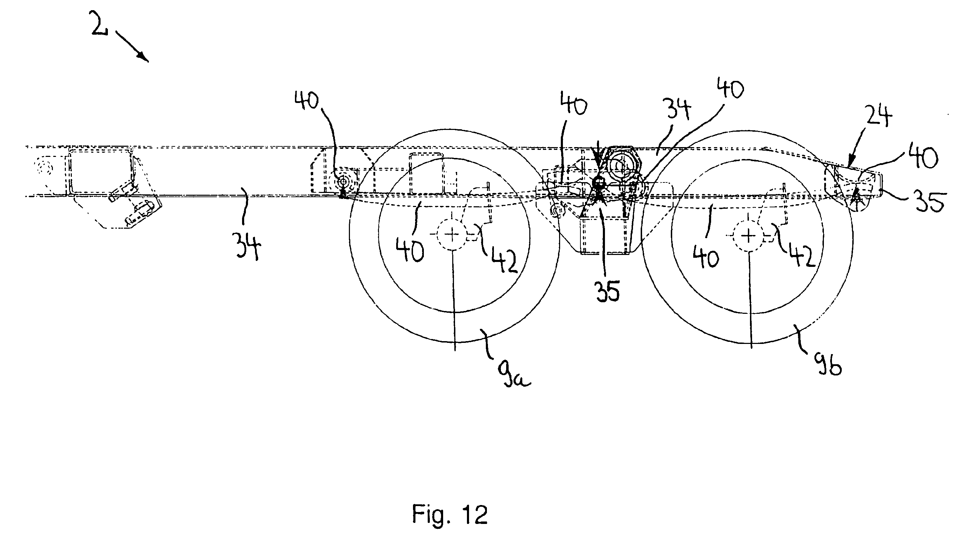

Wie in Fig. 10 und 12 erkennbar ist, sind die beiden Achsen der Tandemachse 3 jeweils beidseits der Längsmittellinie des Kipperfahrzeugs 1 über Blattfedern 40 mit den Fahrgestell-Längsträgern 34 verbunden. Dabei sind mehrere Blattfedern 40 zu einem in der Zeichnung nur schematisch dargestellten Federpakt übereinander gestapelt, das sich mit seiner Längserstreckung in Richtung der Längserstreckung der Fahrgestell-Längsträger 34 erstreckt. Die Enden der Federpakete greifan in die Innenhöhlungen 36 der Fahrgestell-Längsträger 34 ein, wo sie an Lagerstellen 41 mit den Fahrgestell-Längsträgern 34 verbunden sind. Dadurch ergibt sich eine sehr geringe Bauhöhe des Fahrgestells 2, was eine niedrige Anordnung der Ladepritsche 5 ermöglicht. Die Ladepritsche 5 kann dadurch in Hinterkippstellung einfach und sicher mit einem Fahrzeug befahren werden. In Fig. 12 ist noch erkennbar, dass die Achsen über Halterungen 42 mit den Blattfedern 40 verbunden sind. Die Halterungen 42 greifen mit Abstand zu den Lagerstellen 41 an den Blattfedern 40 an.

Mit dem Fahrgestellrahmen 23 ist eine Deichsel 25 verbunden, die an ihrem freien Ende eine Anhängeöse 26 aufweist, die mit einem dazu passenden Gegenkupplungselement eines Zugfahrzeugs verbindbar ist. In Fig. 1 und 2 ist erkennbar, dass an der Deichsel 25 eine quer zur Ebene des Fahrgestellrahmens 23 verstellbare Stütze 27 angeordnet ist, mit welcher der Kippanhänger derart am Erdboden abstützbar ist, dass die Anhängeöse 26 beim Abkoppeln von dem Gegenkupplungselement des Zugfahrzeugs ihren Abstand zum Erdboden in etwa beibehält. In Fig. 1 ist erkennbar, dass der Mittelpunkt der Tandemachse 3 gegenüber dem Mittelpunkt des Kippers 4 nach hinten versetzt angeordnet ist, so dass der Schwerpunkt des Kippanhängers unabhängig von dessen Kippstellung jeweils zwischen der Tandemachse 3 und der Stütze 27 angeordnet ist.
In Figur 1 und 2 ist erkennbar, dass zum Verkippen des Kippers 4 um die Querachse 8 zwei Schwenklager vorgesehen sind, die beidseits des Fahrgestellrahmens 23 in dem Zwischenraum zwischen zueinander benachbarten Rädern 9a, 9b der den beiden Achsen der Tandemachse 3 angeordnet sind. In Figur 8 ist erkennbar, dass die Schwenklager für die Querachse 8 als Kugelgelenk ausgebildet sind, die jeweils ein mit dem Kipper 4 verbundenes Lageroberteil 28a und ein mit dem Fahrgestell 2 verbundenes Lagerunterteil 29a aufweisen. Das Lagerunterteil 29a hat eine etwa kugelförmige oder kugelsegmentförmige Lagerfläche und das Lageroberteil 28a eine dazu passende Lagerpfanne. Das an der linken Fahrzeugseite befindliche Schwenklager der Querachse 8 dient gleichzeitig als Schwenklager für die linke Seitenkippachse 6. In entsprechender Weise dient das an der rechten Fahrzeugseite befindliche Schwenklager der Querachse 8 auch als Schwenklager für die rechte Seitenkippachse 7. Der Kugelmittelpunkt der Lagerfläche des Schwenklagers ist dazu jeweils im Schnittpunkt der Querachse 8 mit der betreffenden Seitenkippachse 6, 7 angeordnet.

Für die Seitenkippachsen 6, 7 ist zusätzlich zu den ersten Schwenklagern 28a, 29a jeweils eine weiteres zweites Schwenklager 28b, 29b vorgesehen, das in Fahrzeuglängsrichtung zu dem ersten Schwenklager versetzt weiter vorne am Kippanhänger angeordnet ist. In Figur 8 ist erkennbar, dass die zweiten Schwenklager jeweils ein mit dem Kipper 4 verbundenes Lageroberteil 28b und ein dazu passendes, an einem Ende des Fahrgestell-Querträgers angeordnetes, als Lagerbolzen ausgebildetes Lagerunterteil 29b aufweisen.

Die Lageroberteile 28a, 28b und die Lagerunterteile 29a, 29b der ersten und zweiten Schwenklager sind jeweils lösbar miteinander verbindbar und durch ein in der Zeichnung nicht näher dargestelltes, als Bolzenteil ausgebildetes Verriegelungselement in Verbindungsstellung verriegelbar. Die Lageroberteile 28a, 28b weisen dazu jeweils eine Steckaufhahme auf, in die das Bolzenteil einsetzbar ist.

Zum Verstellen des Kippers 4 zwischen der Transportstellung, den Seitenkippstellungen und der Hinterkippstellung ist eine hydraulische Verstellvorrichtung vorgesehen, die einen als Teleskopzylinder ausgebildeten hydraulischen Hubzylinder 30 und einen Rückholzylinder 31 aufweist, die mittels einer Hydraulikpumpe 32 betätigbar sind. Die Hydraulikpumpe ist mittels einer Handkurbel 33 manuell antreibbar. Der Hubzylinder 30 und der Rückholzylinder 31 greifen jeweils mit ihrem einen Ende am Fahrgestell 2 und mit ihrem anderen Ende am Kipper 4 gelenkig an. In Figur 8 ist erkennbar, dass die Angriffsstellen am Kipper 4 zwischen den beiden Längsträgern 12 und zwischen den beiden Querträgern 13 des Kippers 4 angeordnet sind. Dabei ist die Angriffsstelle des Hubzylinders 30 etwa mittig am Kipper 4 vorgesehen, während der Rückholzylinder 31 weiter vorne am Kipper 4 angreift. Auch an dem Fahrgestell 2 greift der Rückholzylinder 31 weiter vorne an als der Hubzylinder 30. Durch den Rückholzylinder 31 kann der Kipper 4 auch bei hecklastiger Beladung aus der Hinterkippstellung in die Transportstellung zurückgestellt werden.

Erwähnt werden soll noch, dass die Tandemachse 3 mit Zwillingsbereifung bestückt ist. Es sind aber auch andere Ausführungsbeispiele denkbar, bei denen anstelle der Zwillingsbereifung Einzelbereifung und/oder anstelle der Tandemachse 3 eine Zentralachse mit nur einer einzigen Achse vorgesehen sein kann.

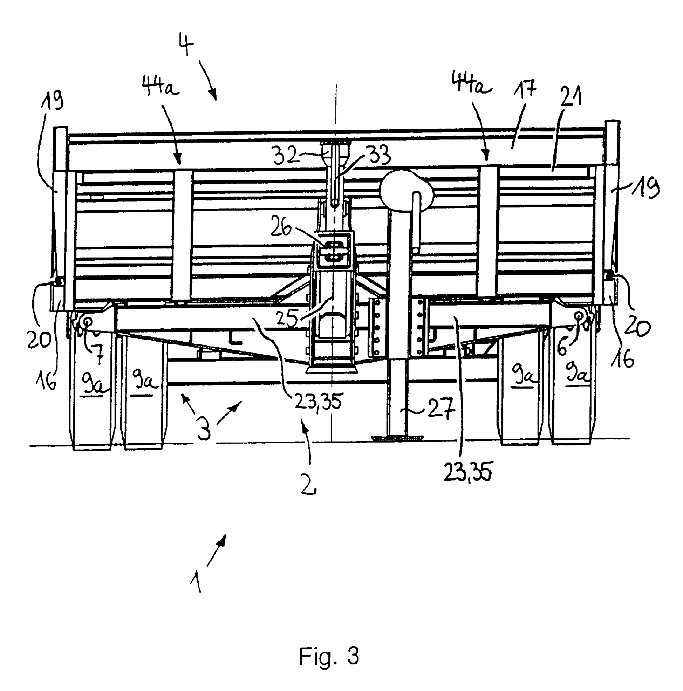

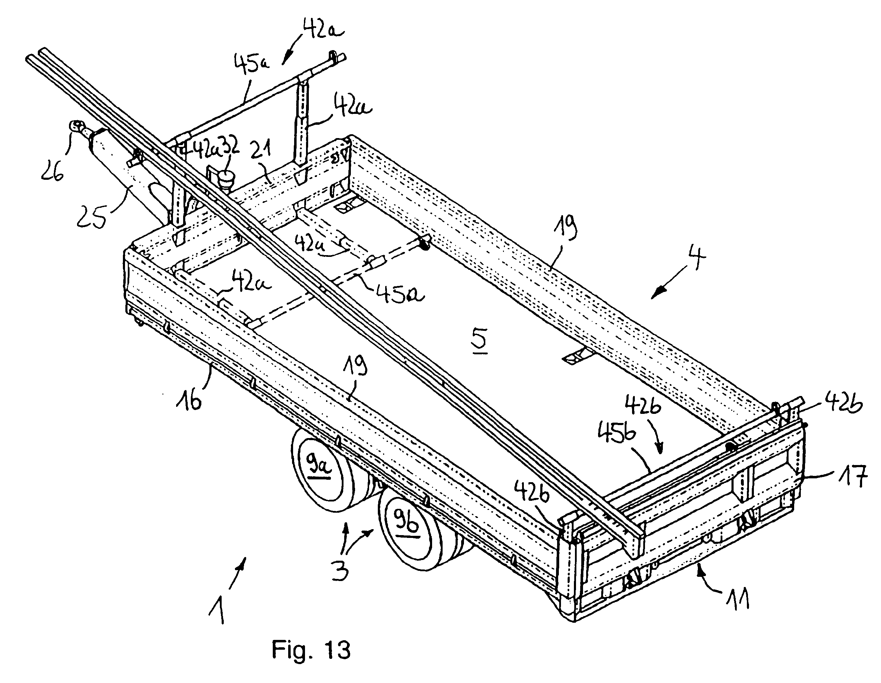

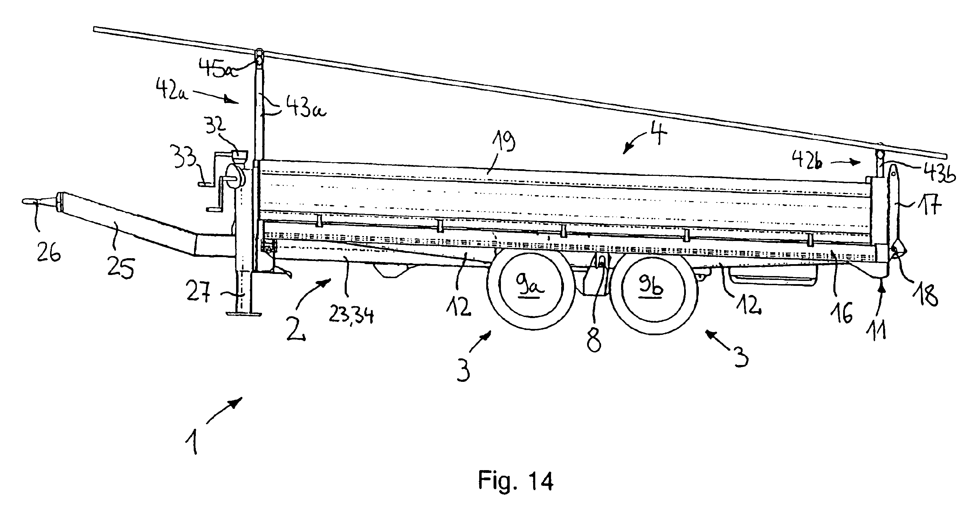

Bei den Ausführungsbeispielen nach Fig. 13 bis 15 weist das Kipperfahrzeug 1 eine vordere Auflagerstütze 42a und eine hintere Auflagerstütze 42b auf Die vordere Auflagerstütze 42a hat wenigstens zwei Rungen 43a, die in einer ersten Gebrauchsstellung mit ihrem einen Ende jeweils in eine dazu passende Aufnahme 44a in der vorderen Bordwand 21 einsteckbar sind und mit ihrem anderen Ende an einem Querträger 45a angreifen, der die Rungen 43a brückenartig miteinander verbindet. Mit seinen freien Enden steht der Querträger 45a seitlich über die Rungen 43a über. In der in Fig. 14 gezeigten ersten Gebrauchsstellung ist die von den Rungen 43a und dem Querträger 45a aufgespannte Ebene etwa in der Erstreckungsebene der vorderen Bordwand 21 angeordnet oder etwas gegenüber dieser Ebene parallel versetzt. In Figur 3 ist erkennbar, dass die Aufnahme 44a für die Rungen 43a von den Längsseitenrändern der Ladepritsche 5 zur Mitte der Ladepritsche 5 hin beabstandet angeordnet sind.

Auch die hintere Auflagerstütze 42b hat wenigstens zwei Rungen 43b, die in einer ersten Gebrauchsstellung mit ihrem einen Ende jeweils in eine dazu passende Aufnahme 44b der Heckklappe 17 einsteckbar sind und mit ihrem anderen Ende an den Endbereichen eines Querträgers 45b angreifen, der die Rungen 43b brückenartig miteinander verbindet. In der in Fig. 14 gezeigten ersten Gebrauchsstellung ist die von den Rungen 43b und dem Querträger 45b aufgespannte Ebene etwa in der Erstreckungsebene der Heckklappe 17 angeordnet oder etwas gegenüber dieser Ebene parallel versetzt. In Figur 13 ist erkennbar, dass die Aufnahme 44a für die Rungen 43a an den Seitenrändern der Heckklappe 17 angeordnet sind.

In der ersten Gebrauchsstellung sind die Auflagerstützen 42a, 43a zum Auflegen von Rohren oder dergleichen langem Transportgut nutzbar. Dabei kann das Transportgut nach vorne und/oder hinten über die Ladepritsche 5 überstehen. Wie in Figur 14 besonders gut erkennbar ist, ist der Querträger 45a der vorderen Auflagerstütze 42a in der ersten Gebrauchsstellung in einer größeren Höhe über der Ladepritsche 5 angeordnet als der Querträger 45b der hinteren Auflagerstütze 42b. Dadurch kann das Ladegut mit seinem vorderen Endbereich gegebenenfalls bis über das Heck der Zugmaschine überstehen, ohne mit diesem zu kollidieren.

In einer zweiten Gebrauchsstellung sind die Auflagerstützen 42a, 42b flach auf der Ladepritsche 5 abgelegt, wie dies in Fig. 13 und 14 strichliniert angedeutet ist. Dabei verlaufen die von den Rungen 43a und den Querträgern 45a bzw. den Rungen 43b und den Querträgern 45b jeweils aufgespannten Ebenen etwa parallel zur Erstreckungsebene der Ladepritsche 5. In dieser zweiten Gebrauchsstellung sind die Auflagerstützen 42a, 42b als Anschläge für ein auf der Ladepritsche zu transportierendes Fahrzeug 10 oder dergleichen Ladegut nutzbar. Dabei können die Querträger 45a, 45b direkt oder indirekt über damit verbundene Bänder, Ketten oder dergleichen Zugmittel beispielsweise an den Reifen des Fahrzeugs 10 angreifen, um die während der Fahrt insbesondere beim Abbremsen des Kipperfahrzeugs 1 auf das Fahrzeug 10 einwirkenden Längskräfte abzustützen. In Hinterkippstellung des Kippers 4 können die Auflagerstützen 42a, 42b darüber hinaus zum Abstützen der in der Ebene der Ladepritsche nach unten weisenden Schwerkraftkomponente des Ladeguts genutzt werden.

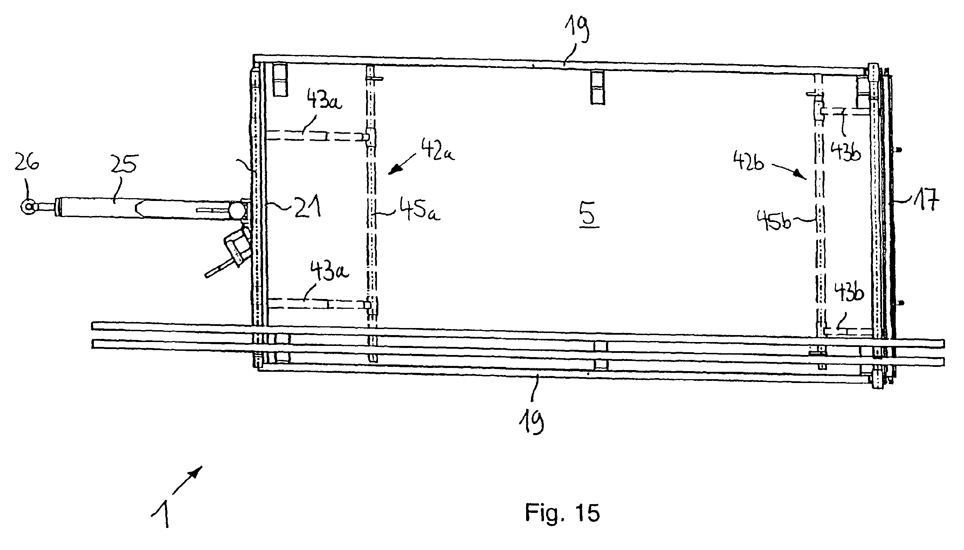

In Fig. 15 ist erkennbar, dass die Länge der Querträger 45a, 45b in der zweiten Gebrauchsstellung jeweils der Breite der Ladepritsche 5 bzw. der lichten Weite zwischen den seitlichen Bordwänden 19 entspricht, so dass die Querträger 45a, 45b quer zur Fahrtrichtung formschlüssig zwischen den Bordwänden 19 gehalten sind.

Die Länge wenigstens eines Querträgers 45a, 45b kann einstellbar sein. Die Querträger 45a, 45b können dazu mehrteilig ausgebildet sein und ein Mittelteil sowie ausziehbar damit verbundene Endstücke aufweisen. Selbstverständlich können die Querträger 45a aber auch eine feste, der lichten Weite zwischen den Bordwänden 19 entsprechende Länge aufweisen.

Die freien Enden der Rungen 43a kommen in der zweiten Gebrauchsstellung an der Innenseite der vorderen Bordwand 21 und die freien Enden der Rungen 43a an der Innenseite der Heckklappe 17 zur Anlage. Die Länge der vorderen Rungen 43a und/oder der hinteren Rungen 43b kann einstellbar sein. Die Rungen 43a, 43b können dazu wenigstens zwei, beispielsweise teleskopartig zueinander verschiebbare und in wenigstens zwei unterschiedlichen Lagen relativ zueinander festlegbare Rungenteile aufweisen. Dadurch kann in der ersten Gebrauchsstellung die Höhe der Querträger 45a, 45b über der Ladepritsche verändert werden. In der zweiten Gebrauchstellung kann der Abstand des vorderen Querträgers 45a von der vorderen Bordwand 21 und/oder der Abstand des hinteren Querträgers 45b von der Heckklappe 17 eingestellt und an unterschiedlich lange zu transportierende Fahrzeuge 10 oder dergleichen Ladegüter derart angepasst werden, dass das Ladegut in Längsrichtung der Ladepritsche 5 formschlüssig zwischen der vorderen Bordwand 21 und der Heckklappe 17 gehalten ist.

Das Kipperfahrzeug 1 weist einen Kipper 4 mit einer Ladepritsche 5 auf der um eine Querachse 8 und wenigstens eine in Fahrzeuglängsrichtung verlaufende Seitenkippachse 6, 7 zwischen einer Transportstellung, einer Hinterkippstellung und wenigstens einer Seitenkippstellung verkippbar auf einem Fahrgestell 2 gelagert ist. Die Querachse 8 ist vom hinteren Ende des Kippers 4 beabstandet im Bereich der Räder 9a, 9b des Fahrgestells 2 angeordnet. Der Kipper 4 steht derart nach hinten über das Fahrgestell 2 über, dass er in Hinterkippstellung direkt als Auffahrrampe nutzbar ist.

## Patentansprüche

1. Kipperfahrzeug (1), mit einem eine Ladepritsche (5) aufweisenden Kipper (4), der um eine Querachse (8) und wenigstens eine in Fahrzeuglängsrichtung verlaufende Seitenkippachse (6, 7) zwischen einer Transportstellung, einer Hinterkippstellung und wenigstens einer Seitenkippstellung verkippbar auf einem Fahrgestell (2) gelagert ist, **dadurch gekennzeichnet, dass** die Querachse (8) vom hinteren Ende des Kippers (4) beabstandet im Bereich der Räder (9a, 9b) des Fahrgestells (2) angeordnet ist, und dass der Kipper (4) derart nach hinten über das Fahrgestell (2) übersteht, dass er in Hinterkippstellung direkt als Auffahrrampe nutzbar ist

2. Kipperfahrzeug (1) nach Anspruch 1, **dadurch gekennzeichnet, dass** der Kipper (4) in Hinterkippstellung mit wenigstens einer an seinem hinteren Ende vorgesehenen Unterstützungsstelle (11) direkt oder indirekt über ein Stützelement am Erdboden aufliegt

3. Kipperfahrzeug (1) nach Anspruch 2, **dadurch gekennzeichnet, dass** die Unterstützungsstelle (11) an einem an der Unterseite der Ladepritsche (5) angeordneten Querträger vorgesehen ist, der vorzugsweise ein Rahmenteil eines Außenrahmens (16) der Ladepritsche (5) bildet.

4. Kipperfahrzeug (1) nach einem der Ansprüche 1 bis 3, **dadurch gekennzeichnet, dass** eine Heckklappe (17) um eine etwa in der Ebene der Ladepritsche (5) an deren hinterem Rand angeordnete Schwenkachse (18) verschwenkbar mit der Ladepritsche (5) verbunden ist, und dass die Heckklappe in Hinterkippstellung des Kippers (4) mit ihrem der Schwenkachse (18) gegenüberliegenden freien Randbereich bis zum Erdboden verschwenkbar ist.

5. Kipperfahrzeug (1) nach einem der Ansprüche 1 bis 4, **dadurch gekennzeichnet, dass** es als Dreiseitenkipper ausgebildet ist

6. Kipperfahrzeug (1) nach einem der Ansprüche 1 bis 5, **dadurch gekennzeichnet, dass** es als Motorfahrzeug ausgebildet ist.

7. Kipperfahrzeug (1) nach einem der Ansprüche 1 bis 6, **dadurch gekennzeichnet, dass** es eine als Tandemachse (3) ausgebildete Zentralachse hat und dass die Lagerstellen für die Querachse (8) in dem Zwischenraum zwischen den beiden Achsen der Tandemachse (8) angeordnet sind, insbesondere zwischen zueinander benachbarten Rädern (9a, 9b) der beiden Achsen.

8. Kipperfahrzeug (1) nach einem der Ansprüche 1 bis 7, **dadurch gekennzeichnet, dass** das Fahrgestell (2) wenigstens eine über Blattfedern oder dergleichen Federelemente mit einem Fahrgestellrahmen (23) verbundene Achse aufweist, dass der Fahrgestellrahmen (23) Längsträger (34) hat, die zumindest im Bereich der Federelemente als unterseitig offenes Hohlprofil ausgebildet sind, insbesondere als U-Profil, dass die Federelemente an in den Innenhöhlungen der Fahrgestell-Längsträger (34) angeordneten Lagerstellen mit den Fahrgestell-Längsträgern 34 verbunden sind.

9. Kipperfahrzeug (1) nach einem der Ansprüche 1 bis 8, **dadurch gekennzeichnet, dass** zum Verkippen des Kippers (4) in die Seitenkippstellungen in Fahrzeuglängsrichtung zueinander versetzte Schwenklager vorgesehen sind, die jeweils ein mit dem Kipper (4) verbundenes Lageroberteil (28a, 28b) und ein mit dem Fahrgestell (2) verbundenes Lagerunterteil (29a, 29b) aufweisen, und dass das Lageroberteil (28a, 28b) und das Lagerunterteil (29a, 29b) mittels wenigstens eines Verriegelungselements lösbar miteinander verbindbar sind.

10. Kipperfahrzeug (1) nach Anspruch 9, **dadurch gekennzeichnet, das** die hinteren Schwenklager im Bereich der Querachse (8) angeordnet und jeweils derart ausgebildet sind, dass das Lageroberteil (28a, 28b) und das Lagerunterteil (29a, 29b) des Schwenklagers sowohl um die dem Schwenklager zugeordnete Seitenkippachse (6, 7) als auch um die Querachse (8) relativ zueinander verschwenkbar sind.

## Claims

1. Tipping vehicle (1), having a tipper (4) which has a loading platform (5) and is mounted on a chassis (2) so as to be able to tip, between a transport position, a rearward-tipping position and at least one sideward-tipping position, about a transverse axis (8) and at least one sideward-tipping axis (6, 7) which runs in the vehicle longitudinal direction, **characterized in that** the transverse axis (8) is arranged, at a distance from the rear end of the tipper (4), in the region of the wheels (9a, 9b) of the chassis, and **in that** the tipper (4) projects rearwards beyond the chassis (2) in such a way that, in the rearward-tipping position, said tipper (4) can be directly utilized as a drive-on ramp.

2. Tipping vehicle (1) according to Claim 1, **characterized in that**, in the rearward-tipping position, the tipper (4) rests directly, or indirectly via a support element, on the ground by means of a supporting point (11) which is provided at the rear end of said tipper (4).

3. Tipping vehicle (1) according to Claim 2, **characterized in that** the supporting point (11) is provided on a transverse member which is arranged on the underside of the loading platform (5), said transverse member preferably forming a frame part of an outer frame (16) of the loading platform (5) .

4. Tipping vehicle (1) according to one of Claims 1 to 3, **characterized in that** a rear flap (17) is connected to the loading platform (5) so as to be pivotable about a pivot axis (18) which is arranged approximately in the plane of the loading platform (5) and at the rear edge thereof, and **in that**, in the rearward-tipping position of the tipper (4), the rear flap can be pivoted to the ground with its free edge region which is situated opposite the pivot axis (18).

5. Tipping vehicle (1) according to one of Claims 1 to 4, **characterized in that** it is embodied as a three-way tipper.

6. Tipping vehicle (1) according to one of Claims 1 to 5, **characterized in that** it is embodied as a motor vehicle.

7. Tipping vehicle (1) according to one of Claims 1 to 6, **characterized in that** it has a central axle which is embodied as a tandem axle (3), and **in that** the bearing points for the transverse axis (8) are arranged in the intermediate space between the two axles of the tandem axle (8), in particular between wheels (9a, 9b), which are adjacent to one another, of the two axles.

8. Tipping vehicle (1) according to one of Claims 1 to 7, **characterized in that** the chassis (2) has at least one axle which is connected to a chassis frame (23) by means of leaf springs or similar spring elements, **in that** the chassis frame (23) has longitudinal members (34) which are embodied, at least in the region of the spring elements, as hollow sections which are open at the bottom, in particular as U-sections, and **in that** the spring elements are connected to the chassis longitudinal members (34) at bearing points which are arranged in the inner cavities of the chassis longitudinal members (34).

9. Tipping vehicle (1) according to one of Claims 1 to 8, **characterized in that**, in order to tip the tipper (4) into the sideward-tipping positions, pivot bearings which are offset relative to one another in the vehicle longitudinal direction are provided, said pivot bearings each having a bearing upper part (28a, 28b) which is connected to the tipper (4) and a bearing lower part (29a, 29b) which is connected to the chassis (2), and **in that** the bearing upper part (28a, 28b) and the bearing lower part (29a, 29b) can be connected to one another in a detachable fashion by means of at least one locking element.

10. Tipping vehicle (1) according to Claim 9, **characterized in that** the rear pivot bearings are arranged in the region of the transverse axis (8) and are each designed such that the bearing upper part (28a, 28b) and the bearing lower part (29a, 29b) of the pivot bearing can pivot relative to one another both about the sideward-tipping axis (6, 7) which is associated with the pivot bearing, and about the transverse axis (8).

## Revendications

1. Véhicule basculant (1) avec une benne basculante (4) comprenant une plate-forme de chargement (5), qui est montée sur un châssis (2) d'une façon basculante autour d'un axe transversal (8) et d'au moins un axe de basculement latéral (6, 7) orienté en direction longitudinale du véhicule entre une position de transport, une position basculée vers l'arrière et au moins une position basculée latéralement, **caractérisé en ce que** l'axe transversal (8) est disposé à distance de l'extrémité arrière de la benne basculante (4), dans la région des roues (9a, 9b) du châssis (2), et **en ce que** la benne basculante (4) déborde vers l'arrière au-delà du châssis (2) de telle façon qu'elle soit utilisable directement comme rampe d'accès en position basculée vers l'arrière.

2. Véhicule basculant (1) selon la revendication 1, **caractérisé en ce que** la benne basculante (4) en position basculée vers l'arrière repose sur le sol par au moins une zone d'appui (11) prévue à son extrémité arrière, directement ou indirectement par un élément d'appui.

3. Véhicule basculant (1) selon la revendication 2, **caractérisé en ce que** la zone d'appui (11) est prévue sur une traverse disposée sur la face inférieure de la plate-forme de chargement (5), et qui forme de préférence une partie d'un cadre extérieur (16) de la plate-forme de chargement (5) .

4. Véhicule basculant (1) selon l'une quelconque des revendications 1 à 3, **caractérisé en ce qu'**une ridelle arrière (17) est assemblée à la plate-forme de chargement (5) de façon basculante autour d'un axe de basculement (18) disposé environ dans le plan de la plate-forme de chargement (5), sur le bord arrière de celle-ci, et **en ce que** la ridelle arrière peut basculer jusqu'au sol avec son bord libre opposé à l'axe de basculement (18), dans la position basculée vers l'arrière de la benne basculante (4).

5. Véhicule basculant (1) selon l'une quelconque des revendications 1 à 4, **caractérisé en ce qu'**il est réalisé sous la forme d'une benne basculante à trois côtés.

6. Véhicule basculant (1) selon l'une quelconque des revendications 1 à 5, **caractérisé en ce qu'**il est réalisé sous la forme d'un véhicule à moteur.

7. Véhicule basculant (1) selon l'une quelconque des revendications 1 à 6, **caractérisé en ce qu'**il comporte un essieu central formé par un essieu tandem (3) et **en ce que** les points d'appui pour l'axe transversal (8) sont disposés dans l'espace intermédiaire entre les deux axes de l'essieu tandem (8), en particulier entre des roues (9a, 9b) voisines l'une de l'autre des deux axes.

8. Véhicule basculant (1) selon l'une quelconque des revendications 1 à 7, **caractérisé en ce que** le châssis (2) comporte au moins un essieu relié au cadre de châssis (23) par des lames de ressort ou des éléments de ressort analogues, **en ce que** le cadre de châssis (23) comprend des longerons (34), qui sont constitués par des profilés creux, ouverts vers le bas au moins dans la région des éléments de ressort, en particulier des profilés en U, **en ce que** les éléments de ressort sont reliés aux longerons (34) du châssis en des points d'appui disposés dans les creux intérieurs des longerons (34) du châssis.

9. Véhicule basculant (1) selon l'une quelconque des revendications 1 à 8, **caractérisé en ce qu'**il est prévu des paliers de basculement décalés l'un par rapport à l'autre dans la direction longitudinale du véhicule pour le basculement de la benne basculante (4) dans les positions basculées latéralement, qui comprennent chaque fois une partie de palier supérieure (28a, 28b) assemblée à la benne basculante (4) et une partie de palier inférieure (29a, 29b) assemblée au châssis (2), et **en ce que** la partie de palier supérieure (28a, 28b) et la partie de palier inférieure (29a, 29b) peuvent être assemblées l'une à l'autre de façon séparable au moyen d'au moins un élément de verrouillage.

10. Véhicule basculant selon la revendication 9, **caractérisé en ce que** les paliers de basculement arrière sont disposés dans la région de l'axe transversal (8) et sont chaque fois configurés de telle manière que la partie de palier supérieure (28a, 28b) et la partie de palier inférieure (29a, 29b) du palier de basculement puissent basculer l'une par rapport à l'autre aussi bien autour de l'axe de basculement latéral (6, 7) associé au palier de basculement qu'autour de l'axe transversal (8).
